# FASCICULE DE BREVET EUROPEEN

(11) **EP 1 069 030 B1**
(45) Date de publication et mention de la délivrance du brevet: **11.05.2005**
(21) Numéro de dépôt: 00401994.9
(22) Date de dépôt: 11.07.2000
(51) Int. Cl.: B62D 33/02, B60K 5/00

(54) **Véhicule léger utilitaire avec chassis d'un nouveau type**
Fahrgestell eines leichten Nutzfahrzeuges
Light utility vehicle chassis

(30) Priorité: 16.07.1999 FR 9909256
(43) Date de publication de la demande: 17.01.2001
(73) Titulaire: Societe J. Bellier, 85440 Talmont St Hilaire (FR)
(72) Inventeur: Bellier, Jean-Jacques, 85180 Château d'Olonne (FR)
(74) Mandataire: Laget, Jean-Loup

(56) Documents cités:
- EP-A- 0 589 584
- EP-A- 0 802 108
- PATENT ABSTRACTS OF JAPAN vol. 1996, no. 08, 30 août 1996 (1996-08-30) & JP 08 108871 A (ATEX CO LTD), 30 avril 1996 (1996-04-30)

## Description

La présente invention concerne un véhicule léger utilitaire à moteur du type décrit au préambule de la revendication connu de la figure 1 du document EP-A-802 108.

De tels véhicules légers utilitaires ne nécessitant pas, pour leur conduite, un permis de conduire, sont des véhicules généralement à quatre roues bien connus à ceux versés dans cet art. Jusqu'à présent, l'inconvénient majeur de ces véhicules utilitaires à plate-forme concerne leur tenue de route et leur comportement en cas de freinage d'urgence. En effet, les véhicules de ce type sont équipés d'un groupe motopropulseur situé à l'avant du véhicule. L'inconvénient de cette configuration réside dans le fait qu'à vide le centre de gravité de l'engin est placé à l'aplomb de l'essieu avant. Au freinage, le véhicule a donc une forte tendance à basculer autour des roues avant.

Un but de la présente invention est de proposer un véhicule utilitaire dont la conception permet d'augmenter la tenue de route du véhicule, en particulier en cas de freinage d'urgence, sans nuire aux autres caractéristiques du véhicule.

A cet effet, l'invention a pour objet un véhicule léger utilitaire à moteur du type constitué des caractéristiques de la revendication 1.

Grâce à cette conception du véhicule utilitaire, l'accès au moteur pour l'entretien courant du véhicule demeure aisé.

Selon une forme de réalisation préférée de l'invention, le groupe motopropulseur du véhicule est refroidi par eau au moyen d'un radiateur à boîtes à eau verticales de manière à réduire l'encombrement de l'ensemble.

Comme, grâce à cette conception du radiateur, l'encombrement de l'ensemble groupe moto-propulseur/radiateur est réduit, il est possible de maintenir une hauteur de chargement du plateau raisonnable.

L'invention sera bien comprise à la lecture de la description suivante d'exemples de réalisation, en référence aux dessins annexés dans lesquels :

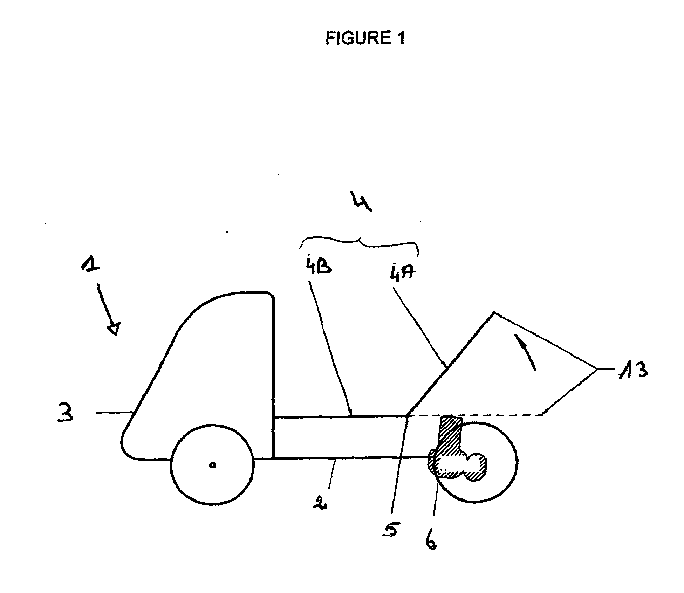

la figure 1 représente une vue schématique de côté d'un véhicule léger utilitaire conforme à l'invention;

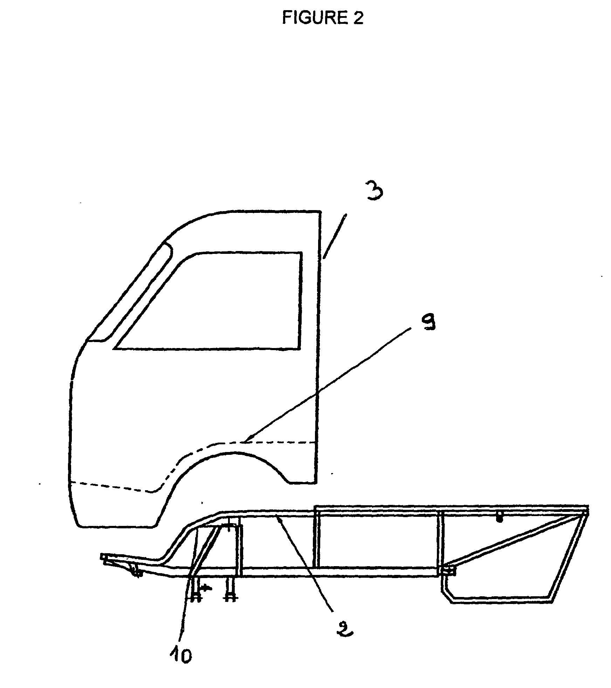

la figure 2 représente une vue de côté d'au moins une partie du véhicule à l'état non assemblé de la cabine sur le châssis du véhicule ;
la figure 3 représente une vue en perspective du châssis du véhicule ;
la figure 4 représente une vue schématique en coupe d'un exemple de réalisation d'un assemblage de la cabine sur le châssis ;
la figure 5 représente une vue arrière en perspective d'un véhicule conforme à l'invention et
la figure 6 représente une vue schématique d'un radiateur équipant le groupe motopropulseur.

Le véhicule léger utilitaire 1, objet de l'invention, est constitué de manière en soi connue d'un châssis porteur, représenté en 2 aux figures, et d'une cabine 3 et d'un plateau de chargement 4 indépendants et rapportés sur le châssis 2. Le châssis porteur 2 se présente sous forme d'une structure tubulaire métallique, telle qu'une structure en acier traitée anticorrosion. La cabine 3 constitue quant à elle un ensemble monolithique généralement un matériau composite, tel que du polyester armé de fibres de verre. Le plateau de chargement 4 peut quant à lui être constitué d'une simple plaque en matériau d'origine végétale ou métallique. Bien évidemment, des ridelles peuvent être en outre prévues sur un tel véhicule.

Conformément à l'invention, le groupe motopropulseur 6 de ce véhicule est situé à l'arrière du véhicule au voisinage de l'essieu arrière du véhicule et sous le plateau de chargement 4. Pour permettre l'accès à ce groupe motopropulseur 6, le plateau, représenté en 4 aux figures, est constitué d'au moins deux parties 4A, 4B dont au moins l'une 4A est mobile pour faciliter l'accès à ce groupe motopropulseur 6. Généralement, au moins deux des parties constitutives du plateau de chargement sont reliées au moyen d'une liaison 5 articulée s'étendant perpendiculairement à l'axe longitudinal du véhicule de manière à permettre le relevage de la partie 4A du plateau 4 de chargement située à l'arrière du véhicule. L'arête de séparation entre les deux plaques 4A, 4B composant le plateau 4 de chargement peut être équipée d'une charnière, de crochets ou de tout autre moyen permettant une liaison articulée entre lesdites plaques 4A, 4B. Généralement, l'une des plaques 4B, qui correspond à une première moitié du plateau de chargement, est fixe tandis que l'autre 4A est mobile voire amovible. La partie mobile 4A du plateau 4 de chargement est équipée de moyens 13 de solidarisation au châssis du véhicule 1. Ces moyens 13 de solidarisation sont de préférence constitués par des organes de liaison à verrouillage rapide tels que des genouillères. Il peut être également envisagé la réalisation d'organes de liaison entre châssis 2 et partie 4A de plateau mobile de type démontable, tels que des écrous papillons, des vis quart de tour, etc.

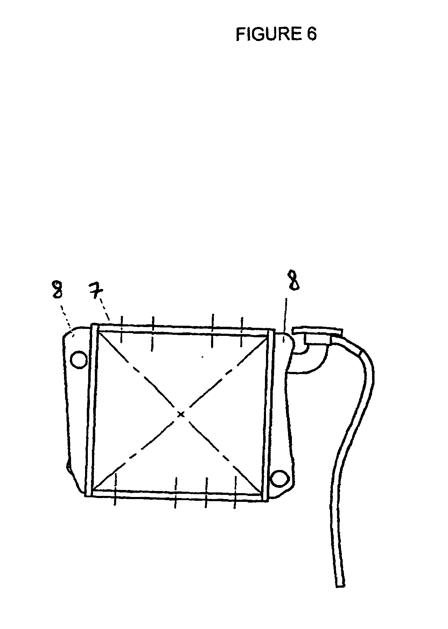

Du fait de son positionnement à l'arrière du véhicule 1 et sous le plateau 4 de chargement, le groupe motopropulseur 6 doit présenter un encombrement réduit. Pour ce faire, ce groupe motopropulseur 6 est refroidi par eau au moyen d'un radiateur 7 à boîtes à eau 8 verticales comme le montre la figure 6.

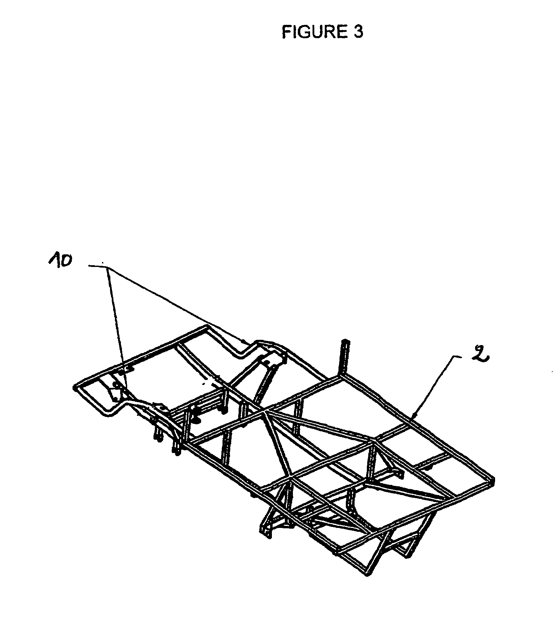

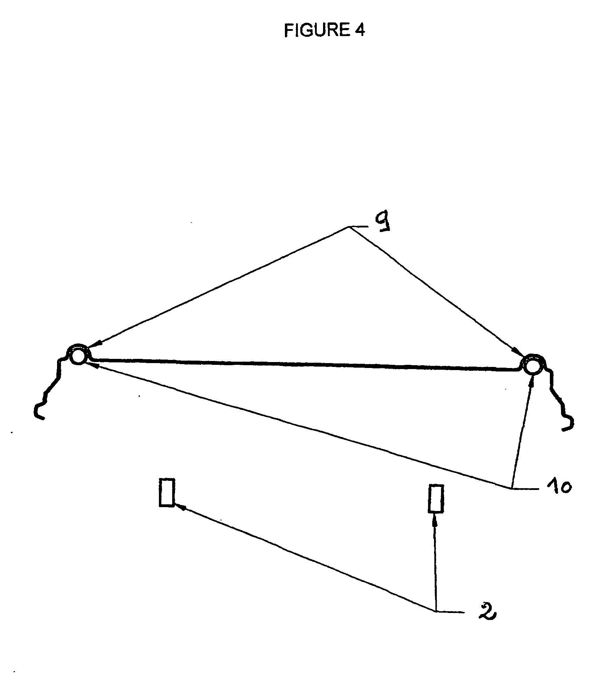

Par ailleurs, pour permettre un assemblage aisé des éléments constitutifs du véhicule, le plancher de la cabine 3 et le châssis 2 à structure tubulaire présentent des formes complémentaires pour un montage à emboîtement de la cabine 3 sur le châssis 2 du véhicule 1. On garantit ainsi un positionnement relatif précis de la cabine 3 par rapport au véhicule 1. Dans l'exemple de réalisation représenté aux figures 3 et 4, pour permettre un tel montage à emboîtement, le plancher de la cabine 3 est galbé et présente au moins deux gouttières 9 venant coiffer des portions 10 courbes des longerons du châssis. Ces portions 10 courbes sont disposées sensiblement dans le premier quart avant du châssis 2. Les longerons constituent ainsi des moyens de centrage lors du positionnement de la cabine 3 sur le châssis 1. Par ailleurs, ces longerons, du fait qu'ils s'étendent sur sensiblement toute la longueur du plancher de la cabine 3, permettent au plancher de la cabine de supporter directement les sièges dans de bonnes conditions de solidité.

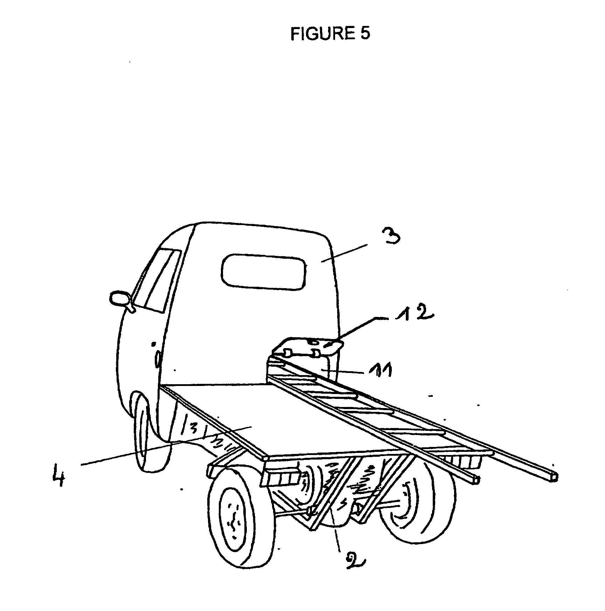

Enfin, il s'avère parfois nécessaire d'augmenter la longueur de chargement lorsque les charges à transporter sont de grande longueur comme dans le cas d'une échelle. Pour ce faire, la cabine 3 est équipée, sur sa face arrière du côté passager, d'une ouverture 11 obturable se situant juste au-dessus du plateau 4 de chargement de manière à permettre, à partir du plateau 4 de chargement, l'introduction de charges dans la cabine 3 du véhicule 1. Tel est le cas de l'exemple représenté à la figure 5 où une ouverture 11 est obturée par une trappe 12. Pour faciliter un tel chargement, le siège côté passage dans la cabine 3 est monté de manière amovible à l'intérieur de la cabine. L'ensemble des caractéristiques décrites ci-dessus concourent à la réalisation d'un véhicule utilitaire léger, sûr, de construction rapide, de maintenance aisée, sans nuire aux performances dudit véhicule.

## Revendications

1. Véhicule (1) léger utilitaire moteur du type constitué d'un châssis (2) porteur, d'une cabine (3) et d'un plateau (4A, 4B) de chargement, et d'un groupe motopropulseur (6) du véhicule (1) situé à l'arrière du véhicule, sous le plateau (4) de chargement, **caractérisé en ce que** ledit plateau étant constitué d'au moins deux parties (4A, 4B) dont au moins l'une (4A) est mobile pour faciliter l'accès audit groupe motopropulseur (6).

2. Véhicule (1) selon la revendication 1,
**caractérisé en ce qu'**au moins deux des parties constitutives du plateau (4) de chargement sont reliées au moyen d'une liaison (5) articulée s'étendant perpendiculairement à l'axe longitudinal du véhicule de manière à permettre le relevage de la partie (4A) du plateau (4) située à l'arrière du véhicule.

3. Véhicule (1) selon l'une des revendications 1 et 2,
**caractérisé en ce que** le groupe motopropulseur (6) du véhicule est refroidi par eau au moyen d'un radiateur (7) à boîtes à eau (8) verticales de manière à réduire l'encombrement de l'ensemble.

4. Véhicule (1) selon l'une des revendications 1 à 3,
**caractérisé en ce que** le plancher de la cabine (3) et le châssis (2) à structure tubulaire présentent des formes complémentaires pour un montage à emboîtement de la cabine (3) sur le châssis (2) du véhicule.

5. Véhicule (1) selon l'une des revendications 1 à 4,
**caractérisé en ce que** le plancher de la cabine est galbé et présente au moins deux gouttières (9) venant coiffer des portions (10) courbes des longerons du châssis (2).

6. Véhicule (1) selon l'une des revendications 1 à 5,
**caractérisé en ce que** la cabine (3) est équipée, sur sa face arrière du côté passager, d'une ouverture (11) obturable se situant juste au-dessus du plateau (4) de chargement de manière à permettre à partir du plateau (4) de chargement l'introduction de charges dans la cabine (3) du véhicule.

7. Véhicule (1) selon l'une des revendications 1 à 6,
**caractérisé en ce que** la cabine est un ensemble monolithique réalisé en un matériau composite tandis que le châssis porteur présente une structure tubulaire.

## Patentansprüche

1. Leichtes motorbetriebenes Nutzfahrzeug (1), mit einem tragenden Chassis (2), einer Fahrerkabine (3) und einer unter der Ladefläche (4A, 4B) und am Heck (4) des Fahrzeugs (1) angeordneten Antriebsbaugruppe des Fahrzeugs, **dadurch gekennzeichnet, dass** die genannte Ladefläche aus mindestens zwei Teilen (4A, 4B) gebildet ist, von denen wenigstens eines (4A) beweglich ist, um den Zugang zu der Antriebsbaugruppe (6) zu erleichtern.

2. Fahrzeug (1) nach Anspruch 1,
**dadurch gekennzeichnet, dass** mindestens zwei der die Ladefläche (4) bildenden Teile über eine Gelenkverbindung (5) miteinander verbunden sind, welche senkrecht zur Fahrzeuglängsachse verläuft, um das Anheben des Teiles (4A) der Ladefläche (4) am Heck des Fahrzeugs zu ermöglichen.

3. Fahrzeug (1) nach einem der Ansprüche 1 und 2,
**dadurch gekennzeichnet, dass** die Antriebsbaugruppe (6) des Fahrzeugs von einem vertikal angeordneten Wasserkühler (8) gekühlt wird, um den erforderlichen Platzbedarf zu reduzieren.

4. Fahrzeug (1) nach einem der Ansprüche 1 bis 3,
**dadurch gekennzeichnet, dass** der Boden der Fahrerkabine (3) und das Chassis mit einer Rohrstruktur (2) derart komplementär gestaltet sind, dass die Fahrerkabine (3) in den Rahmen (2) des Fahrzeugs eingeschoben bzw. auf diesen aufgeschoben werden kann.

5. Fahrzeug (1) nach einem der Ansprüche 1 bis 4,
**dadurch gekennzeichnet, dass** der Boden der Fahrerkabine gewölbt ist und mindestens zwei Führungen (9) aufweist, die auf gerundeten Teilen (10) der Längsträger des Rahmens (2) aufliegen.

6. Fahrzeug (1) nach einem der Ansprüche 1 bis 5,
**dadurch gekennzeichnet, dass** die Fahrerkabine (3) in ihrer Rückseite auf der Beifahrerseite eine verschließbare Öffnung (11) direkt über der Ladefläche (4) aufweist, so dass von der Ladefläche (4) aus Lasten in das Innere der Fahrerkabine eingeführt werden können.

7. Fahrzeug (1) nach einem der Ansprüche 1 bis 6,
**dadurch gekennzeichnet, dass** es sich bei der Fahrerkabine um eine Monocoque-Kabine aus Verbundwerkstoff und bei dem tragenden Chassis um eine Rohrstruktur handelt.

## Claims

1. Light commercial motor vehicle (1) of the type comprising a load-bearing chassis (2), a cab (3) and a loading platform (4A, 4B), as well as an engine assembly (6) for the vehicle (1) situated at the rear of the vehicle, beneath the loading platform (4), **characterised in that** said platform comprises at least two parts (4A, 4B), at least one (4A) of which is displaceable in order to facilitate access to said engine assembly (6).

2. Vehicle (1) according to claim 1, **characterised in that** at least two of the constituent parts of the loading platform (4) are connected by means of an articulated connection (5), which extends perpendicularly to the longitudinal axis of the vehicle so as to permit the raising of the part (4A) of the platform (4) situated at the rear of the vehicle.

3. Vehicle (1) according to one of claims 1 and 2, **characterised in that** the engine assembly (6) of the vehicle is cooled by water by means of a radiator (7) having vertical water compartments (8), so as to reduce the size of the assembly.

4. Vehicle (1) according to one of claims 1 to 3, **characterised in that** the floor of the cab (3) and the chassis (2) of tubular construction have complementary forms for the interlocking fitting of the cab (3) on the chassis (2) of the vehicle.

5. Vehicle (1) according to one of claims 1 to 4, **characterised in that** the floor of the cab is curved and has at least two grooves (9) which cover bent portions (10) of the struts of the chassis (2).

6. Vehicle (1) according to one of claims 1 to 5, **characterised in that** the cab (3) is provided, on its rear face on the passenger side, with a closable aperture (11), which is -situated just above the loading platform (4), so as to permit the introduction of loads into the cab (3) of the vehicle from the loading platform (4).

7. Vehicle (1) according to one of claims 1 to 6, **characterised in that** the cab is a monolithic assembly produced from a composite material, while the supporting chassis has a tubular construction.
